# EUROPÄISCHE PATENTSCHRIFT

(11) **EP 0 642 407 B1**
(45) Veröffentlichungstag und Bekanntmachung des Hinweises auf die Patenterteilung: **06.10.1999**
(21) Anmeldenummer: 94911941.6
(22) Anmeldetag: 22.03.1994
(51) Int. Cl.: B29C 53/08

(54) **VERFAHREN UND VORRICHTUNG ZUM BIEGEN VON KUNSTSTOFFROHREN**
PROCESS AND DEVICE FOR BENDING PLASTIC PIPES
PROCEDE ET DISPOSITIF PERMETTANT DE CINTRER DES TUYAUX EN PLASTIQUE

(30) Priorität: 26.03.1993 DE 4309909
(43) Veröffentlichungstag der Anmeldung: 15.03.1995
(73) Patentinhaber: Aeroquip, Zweigniederlassung der Trinova GmbH, D-76532 Baden-Baden (DE)
(72) Erfinder: SCHIMMELPFENNIG, Rainer, D-76532 Baden-Baden (DE); LIPPENOO, Olaf, D-76547 Sinzheim (DE)
(74) Vertreter: Rehberg, Elmar, Dipl.-Ing.
(86) Internationale Anmeldenummer: EP9400884
(87) Internationale Veröffentlichungsnummer: WO9422660

(56) Entgegenhaltungen:
- EP-A- 0 486 237
- FR-A- 2 345 278
- US-A- 2 571 416
- US-A- 3 184 796
- US-A- 3 965 715

## Beschreibung

Die Erfindung bezieht sich auf ein Verfahren und eine Vorrichtung zum Biegen eines Rohrstucks aus Kunststoff mit den in den Oberbegriffen der Ansprüche 1 und 2 genannten Merkmalen.

Die EP-A-0 486 237 zeigt bereits ein verfahren zum Biegen eines Rohrstückes aus Kunststoff mit den im Oberbegriff des Anspruches 1 genannten Merkmalen, bei dem das Rohrstück entsprechend der gewünschten Formgebung um eine oder mehrere Biegescheiben festgelegt und partiell an den Biegestellen erwärmt wird, worauf das Rohrstück von innen mit kalter Preßluft gekühlt wird. Dieses Verfahren läßt sich nur bei relativ dünnwandigen und aus vergleichsweise elastischem Kunststoff bestehenden Rohrstücken anwenden, da das einzelne Rohrstück entsprechend der gewünschten Formgebung in kaltem Zustand um eine oder mehrere Biegescheiben herumgelegt und fixiert werden muß. Erst anschließend erfolgt das partielle Erwärmen im Bereich der Biegestellen. Hierzu wird Infrarotlicht eingesetzt, welches von mehreren einstellbar angeordneten Infrarotstrahlern erzeugt und in Richtung auf die Biegestellen des Rohrstückes geschickt wird. Um die Erwärmung des Rohrstückes im Bereich der Biegescheiben zu begünstigen, bestehen die Biegescheiben aus durchscheinendem oder durchsichtigem Material, z. B. Glas. Trotzdem wird die Erwärmung so durchgeführt, daß die Wärme per Wärmeleitung auch auf die Stellen des Rohrstückes gelangt, die durch die Biegescheiben abgedeckt sind. Es versteht sich, daß die Erwärmung per Wärmeleitung eine entsprechende Zeit erfordert. Zudem müssen die Biegescheiben mit kleineren Radien versehen sein, als es der gewünschten Formgebung des Rohrstückes entspricht; damit wird ein gewisses Auffedern des gebogenen Rohrstückes zugelassen. Die Abkühlung des Rohrstückes erfolgt in festgespanntem Zustand durch das Einleiten von kalter Preßluft in das Rohrstück hinein und durch das Rohrstück hindurch. Auch von der Außenseite kann das Rohrstück gekühlt werden. Nachteilig hieran ist, daß das Rohrstück praktisch mit Umgebungstemperatur um die Biegescheiben festgelegt werden muß und die Infrarotstrahlung im wesentlichen nur zu einer Wärmeentwicklung auf der den Strahlern zugekehrten Oberfläche des Rohrstückes erfolgt.

Aus der DE 2 601 818 A1 ist ein Verfahren zum Biegen eines Rohrstückes aus Kunststoff bekannt, bei dem das Rohrstück zunächst bis in den Bereich einer optimalen Warmformtemperatur des Kunststoffes erwärmt wird, anschließend ein Stützkern in das Rohrstück eingeführt und das Rohrstück mit dem Stützkern um eine Biegeschablone gebogen wird, die einen Teil eines Zylinders darstellt, dessen Radius dem Krümmungsradius des gebogenen Rohrstückes entspricht. Unter der optimalen Warmformtemperatur wird der Temperaturbereich verstanden und bei den meisten Warmformverfahren angestrebt, bei dem der Kunststoff den Verformungskräften nachgibt, aber noch genügend Kohäsion aufweist, um unter diesen Kräften nicht zu zerreißen. Die dabei eingesetzten Aufwärmvorrichtungen, z. B. Flüssigkeitsbäder, dienen nicht der Vorwärmung, sondern stellen die eigentliche Erwärmungsvorrichtung dar. Diese Art der Erwärmung, die vor dem Biegen erfolgt, ist typisch mit der Einbringung eines Kernstückes in das Rohrstück verbunden, um bei dem nachfolgenden Biegevorgang ein Einfallen des Rohrstückes zu vermeiden.

Die FR-A-2 345 278 zeigt ein Verfahren und eine Vorrichtung zur Herstellung eines Fensters mit einem gebogenen Profilstück aus einem Kunststoffhohlprofil, welches durch einen eingesetzten Träger aus einem Profilstück aus Metall oder Aluminium verstärkt ist. Das Profilstück aus dem Kunststoffhohlprofil wird zunächst allein in ein auf Erwärmungstemperatur des Kunststoffes aufgeheiztes Wasserbad abgesenkt und dort erwärmt. Anschließend wird der Träger in das im Wasserbad befindliche Profilstück aus dem Kunststoffhohlprofil eingeschoben, wodurch das Profilstück aus dem Kunststoffhohlprofil die Form des eingeschobenen Trägers annimmt. Nach dem Herausnehmen des Profilstücks mit dem Träger aus dem Wasserbad wird diese Einheit flach aufgelagert, vorteilhaft mehrfach gewendet, und sodann in einem ersten Abkühlschritt mit Kühlluft angeblasen und in einem zweiten Abkühlschritt in einem Wasserbad zusätzlich kurz abgeschreckt, damit die Flächen des Profilstücks nicht einfallen. Ein eigentlicher Biegevorgang des Profilstücks findet nicht statt.

Der Erfindung liegt die Aufgabe zugrunde, ein Verfahren und eine Vorrichtung aufzuzeigen, mit denen es möglich ist, auch dickwandige Rohre aus Kunststoff auch von ungeübten oder angelernten Hilfskräften sehr genau und schnell in die gewünschte Form zu bringen.

Erfindungsgemäß wird dies bei dem Verfahren durch die Merkmale des Anspruches 1 erreicht. Das Rohrstück wird zunächst einem Wasserbad von ca. 80 °C vorgewärmt und anschließend um die Biegescheiben in die gewünschte Formgebung gebracht. Das Rohrstück wird im Bereich der Biegestellen unter Zufuhr von Heißluft nahezu allseitig für eine Zeitdauer von 10 bis 15 sec. umströmt, so daß eine Erwärmung auf maximal 160 °C eintritt. Anschließend wird das Rohrstück während etwa 10 bis 15 sec. von innen mit kalter Preßluft in einer ersten Abkühlung beaufschlagt. Anschließend wird das Rohrstück in einem kalten Wasserbad abgelegt.

Mit dem erfindungsgemäßen Verfahren ist es möglich, Rohrstücke sehr genau und sehr schnell in beliebiger Ebene oder räumlicher Formgebung zu verformen, wodurch die Produktion derartiger verformter Rohrstücke wesentlich beschleunigt und verbilligt wird.

Die erfindungsgemäße Vorrichtung kennzeichnet sich durch die Merkmale des Anspruches 2. Als Wärmequellen sind Lufterhitzer vorgesehen, die jeweils einen die Biegescheibe umgreifenden Luftführungskanal aufweisen. Die Biegescheiben weisen auf ihren beiden Seitenflächen jeweils mindestens eine Reihe von Löchern zur Querumströmung der von den Lufterhitzern kommenden Heißluft auf. Die Löcher stehen mit am Boden der Kehlen der Biegescheiben vorgesehenen Durchbrüchen in Verbindung, die zu einem in der jeweiligen Biegescheibe vorgesehenen Abströmkanal für die Heißluft führen.

Die Vorrichtung besitzt weiterhin Schalt- und Steuereinrichtungen zur Steuerung des Arbeitsablaufes, insbesondere zum Bewegen und zum Ein- und Ausschalten der Lufterhitzer und der Zufuhr der Preßluft für die Kühlung der Rohrstücke.

Mit der Vorrichtung gemäß der Erfindung ist es in einfacher Weise möglich, die zuvor auf 80 °C im Wasserbad erwärmten Rohrstücke, die noch eine gewisse Spannung besitzen, um die einzelnen, speziell positionierten Biegescheiben herumzulegen und auf die Biegescheiben an den entsprechenden Stellen die Lufterhitzer zuzuführen.

Als Lufterhitzer kann ein Heißluftfön vorgesehen sein, der eine kastenförmige Führung für die Heißluft mit einer halbkreisförmigen Aussparung aufweist.

Die Biegescheiben bestehen jeweils aus zwei Teilen, wobei das obere Teil halbkreisförmig ausgebildet ist und verdrehbar auf dem unteren Teil angeordnet ist. Damit ist es möglich, die jeweilige Biegescheibe einseitig zu öffnen, das Rohrstück einzulegen und das Oberteil der Biegescheibe in die Schließstellung zu verdrehen.

Eine bevorzugte Ausführungsform der Vorrichtung ist in den Zeichnungen dargestellt und wird nachfolgend weiter erläutert. Es zeigen:
- Fig. 1: eine Prinzipdarstellung der Vorrichtung gemaß der Erfindung,
- Fig. 2: eine Draufsicht auf die in Fig. 1 im Prinzip dargestellte Vorrichtung,
- Fig. 3: in vergrößertem Maßstab den aus den Führungsscheiben und den Lufterhitzern bestehenden Teil der Vorrichtung gemäß der Erfindung,
- Fig. 4: in Draufsicht eine Biegescheibe gemäß der Erfindung,
- Fig. 5: zeigt einen Schnitt A-A von Fig. 4.

In einem Maschinengestell 1, das mit einem Schutzgitter 2 abgedeckt ist, befinden sich auf speziellen Haltern mehrere Biegescheiben 3, um die das zu biegende Rohrstück 4 nach Entnahme aus dem Wasserbad gelegt wird. Auf die einzelnen Biegescheiben 3 sind Lufterhitzer 5, z. B. Heißluftföne, bewegbar, um die Erhitzung an den gewünschten Krümmungen vorzunehmen.

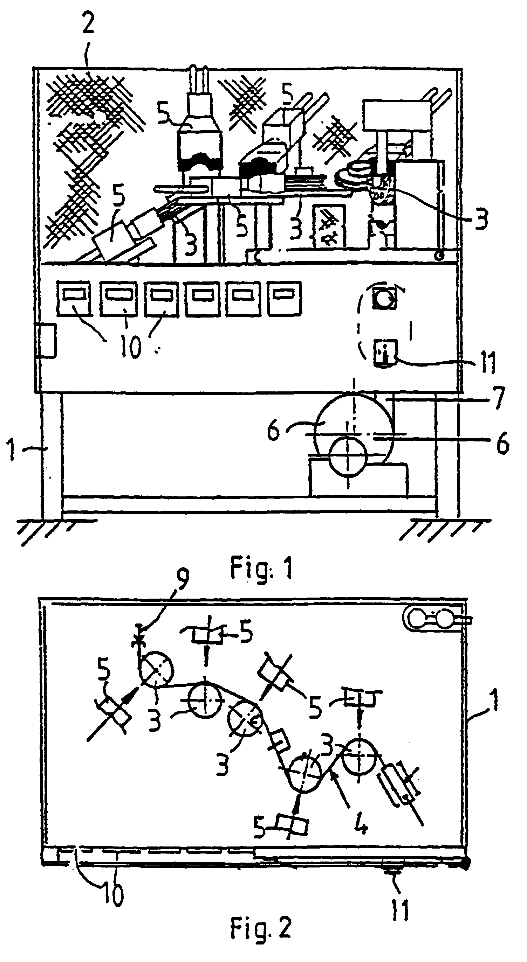

In Fig. 2 sind die Biegescheiben in Draufsicht in einer Ebene gezeichnet. In Wirklichkeit sind sie jedoch entsprechend dem Rohrverlauf im Raum positioniert, wie sich beispielsweise aus Fig. 1 ergibt.

Mit 6 ist ein Gebläse bezeichnet, das die Luft über die Luftzufuhr 7 zu den Lufterhitzern 5 führt. Im Bedarfsfall kann ferner noch eine Rohrabstützung im Bereich des Verlaufes des Rohrstückes vorgesehen sein. Die Rohrposition mit der Kühlluftdüse für die Erstkühlung mit Preßluft ist bei 9 vorgesehen.

Die Vorrichtung wird ergänzt durch die an der Vorderseite vorgesehene Temperaturanzeige 10 und den Hauptschalter 11 mit Nachlaufzeitschalter für das Gebläse zum Abkühlen der Lufterhitzer.

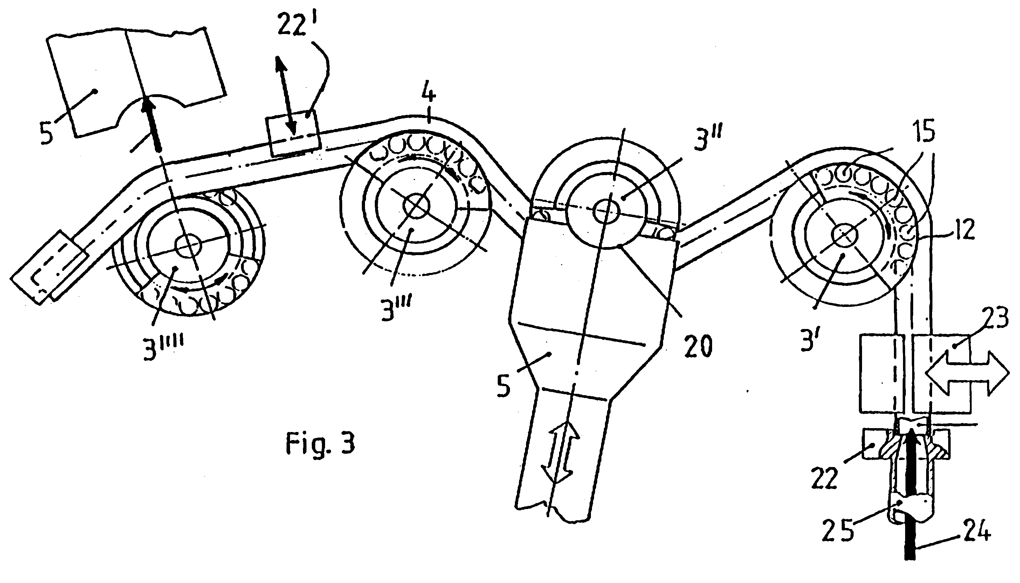

In Fig. 3 ist eine vergrößerte Teildarstellung der Anordnung der Biegescheiben gezeigt.

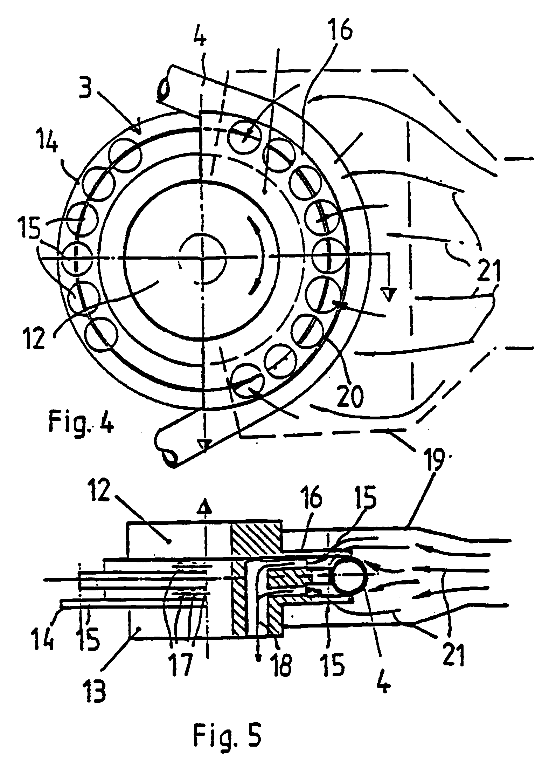

Wie sich aus den Fig. 4 und 5 in Verbindung mit Fig. 3 ergibt, bestehen die Biegescheiben 3 aus zwei Teilen, nämlich einem Oberteil 12 und einem Unterteil 13. Das Unterteil 13 weist eine Kreisscheibe 14 auf, die mit Löchern 15 versehen ist. Das Oberteil 12 weist nur eine halbkreisförmige Scheibe 16 auf, die ebenfalls mit Löchern 15 versehen ist. Das Oberteil 12 ist gegenüber dem Unterteil 13 verdrehbar.

In der Nabe beider Teile sind Durchbrüche 17 vorgesehen, die in Abflußkanäle 18 münden. Auf die Biegescheibe 3 wird ein Luftführungskanal 19, der eine der Nabe der Scheibe entsprechende Aussparung 20 aufweist, aufgeschoben. Die vom Heißlufterzeuger austretende Luftströmung 21 verläuft durch die Öffnungen 15, umströmt dabei das zu biegende Rohrstück 4 und tritt aus den Durchbrüchen 17 in die Abflußkanäle 18. Dadurch wird eine intensive Erwärmung des Rohrstückes 4 auf die gewünschte Temperatur gewährleistet.

Unter Bezugnahme auf Fig. 3 wird der Arbeitsablauf des Biegevorganges dargestellt. Das auf Fertigmaß, z. B. mit Endanschlußstücken vormontierte Rohr 4, das im Wasserbad vorgewärmt wurde, wird in die Biegevorrichtung durch den Anschlag 22 justiert eingelegt.

Je nach Biegeverlauf des zu produzierenden Rohrstückes wird festgelegt, in welcher Reihenfolge die einzelnen Biegevorgänge ablaufen. Hierzu wird manuell die erste Biegescheibe 3' durch Drehen des Oberteils 12 geschlossen und das Rohr mittels der Klemmvorrichtung 23 gespannt, um es in der vorgegebenen Position zu fixieren. Dabei sind die Biegescheiben 3'' und 3''' geschlossen, und die Biegescheibe 3'''' ist offen. Danach wird das Rohr mit der Hand in die nächste Position gebogen und um die geöffnete Biegescheibe 3'' gelegt und die zweite Biegescheibe geschlossen. Der Vorgang läuft in gleicher Weise bis zur Biegescheibe 3'''' ab. Je nach Aufbau der Vorrichtung werden weitere Klemmvorrichtungen 22' verriegelt.

Diese Arbeitsgänge setzen sich gleichermaßen fort, bis der letzte Bogen des Werkstückes in die Vorrichtung eingebogen ist, beispielsweise bei 3'''', worauf diese Biegescheibe geschlossen wird.

Nun werden durch Auslösen der Handbedienung die Heißluftföne 5 in die Position der jeweiligen Biegescheibe 3'' bzw. 3''' gebracht, um das Rohr im Biegebereich auf die erforderliche Arbeitstemperatur zu erwärmen.

Nach Ablauf der für das Werkstück vorgegebenen Heizzeit von ca. 10 bis 15 sec. fahren die Heißluftföne 5 automatisch in ihre Ausgangsposition zurück. Gleichzeitig wird kalte Preßluft bei der Zufuhr 24 eingeschaltet, die das Kunststoffrohr 4 von innen durchströmt. Freigegeben wird die Preßluft durch eine Düse 25, die sich im Anschlag 22, der für die Justierung des Werkstückes vorgesehen ist, befindet.

Nach entsprechend festgelegter Kühlphase schaltet der Preßluftstrom automatisch ab, die Klemmvorrichtungen und die Biegescheiben werden automatisch gelöst, und das Werkstück wird entnommen und für die zweite Abkühlphase zum Entziehen der Restwärme in einem Wasserbad abgelegt.

## Patentansprüche

1. Verfahren zum Biegen eines Rohrstücks aus Kunststoff, bei dem das Rohrstück entsprechend der gewünschten Formgebung um eine oder mehrere Biegescheiben festgelegt und partiell an den Biegestellen erwärmt wird, worauf das Rohrstück von innen mit kalter Preßluft gekühlt wird, bevor das Rohrstück im einem kalten Wasserbad abgelegt wird, **dadurch gekennzeichnet,** daß das Rohrstück vor dem Festlegen um die Biegescheiben zunächst in einem Wasserbad von ca. 80 °C vorgewärmt wird, und daß das Rohrstück im Bereich der Biegestellen unter Zufuhr von Heißluft nahezu allseitig für eine Zeitdauer von 10 bis 15 sec umströmt wird, sodaß eine Erwärmung auf maximal 160 °C eintritt.

2. Vorrichtung zur Durchführung des Verfahrens nach Anspruch 1, mit mehreren in einem Maschinenrahmen (1) entsprechend der gewünschten Formgebung einstellbar festgelegten und Kehlen aufweisenden Biegescheiben (3), mit Wärmequellen zur Erwärmung des Rohrstücks (4) im Bereich der Biegestellen sowie mit einem Anschluß für kalte Preßluft zum Durchströmen des Rohrstücks (4) zu Abkühlzwecken, **dadurch gekennzeichnet,** daß als Wärmequellen zur Erwärmung des Rohrstücks (4) Lufterhitzer vorgesehen sind, die jeweils einen die Biegescheibe (3) umgreifenden Luftführungskanal (19) aufweisen, daß die Biegescheiben (3) auf ihren beiden Seitenflächen jeweils mindestens eine Reihe von Löchern (15) zur Querumströmung der von den Lufterhitzern kommenden Heißluft aufweisen, daß die Löcher (15) mit am Boden der Kehlen der Biegescheiben (3) vorgesehenen Durchbrüchen (17) in Verbindung stehen, die zu einem in der jeweiligen Biegescheibe vorgesehenen Abströmkanal (18) für die Heißluft führen.

3. Vorrichtung nach Anspruch 2, **dadurch gekennzeichnet,** daß am Maschinenrahmen (1) Schalt- und Steuereinrichtungen zur Steuerung des Arbeitsablaufes, insbesondere zum Bewegen und zum Ein- und Ausschalten der Lufterhitzer und der Zufuhr der Preßluft für die Kühlung des Rohrstückes, angeordnet sind.

4. Vorrichtung nach Anspruch 2, **dadurch gekennzeichnet,** daß als Lufterhitzer ein Heißluftfön (5) vorgesehen ist.

5. Vorrichtung nach Anspruch 2, **dadurch gekennzeichnet,** daß die Biegescheiben (3) jeweils aus zwei Teilen bestehen, wobei das obere Teil (13) halbkreisförmig ausgebildet ist und verdrehbar auf dem unteren Teil (14) angeordnet ist.

6. Vorrichtung nach Anspruch 4, **dadurch gekennzeichnet,** daß der Heißluftfön (5) einen Luftführungskanal (19) mit einer der Biegescheibe entsprechenden halbkreisförmigen Aussparung (20) aufweist.

## Claims

1. A method for bending a plastic pipe section in which the plastic pipe section is arranged around one or more bending plates dependently on the desired shape of the pipe and partially heated at bending points, whereafter the pipe section is subjected to a cooling process from inside of the pipe section using cold compressed air, prior to placing the pipe section in a cold water bath, **wherein** the pipe section prior to arranging around the bending plates is first preheated in a water bath of about 80 °C, and then the pipe section near to the bending points is overflown at all sides by hot air for a duration of 10 to 15 seconds so that the pipe section is heated to a maximum of 160 °C.

2. An apparatus for implementing the method of claim 1, with a plurality of bending plates (3) each of which has flutes are positioned on a frame (1) dependently on the desired shape of the pipe, with heating sources to heat the pipe section (4) near to the bending points and with a connection for could compressed air to flow through the pipe section (4) for cooling purpose, **wherein** air heaters are arranged as heating sources to heat the pipe section (4), the air heaters containing an air channel (19) surrounding the bending plate (3), the bending plates (3) are provided with at least one row of openings (15) on each of their two surfaces for the cross flow of hot air from the air heaters over the pipe section, the openings (15) being in connection with a plurality of holes (17) which are provided at the base of the flutes of the bending plates (3), which holes run into an exhaust conduit (18) for the hot air being provided in the corresponding bending plate.

3. The apparatus of claim 2, **wherein** switch elements and control elements for controlling the process are provided on the frame (1), especially for moving and switching the air heaters on and off and for introducing compressed air to cool the pipe section.

4. The apparatus of claims 2, **wherein** the air heater includes a hot air blower (5).

5. The apparatus of claims 2, **wherein** the bending plates (3) contain two parts, whereby an upper part (12) has the shape of a semicircle and is placed pivotally on a lower part (13).

6. The apparatus of claims 4, **wherein** the hot air blower (5) comprises an air channel (19) for the hot air, the air channel having a cutout (20) in a semicircular shape dependently to the bending plate.

## Revendications

1. Procédé permettant de cintrer un tuyau en plastique où le tuyau est place, en fonction de la forme qu'on désire lui donner, autour d'un ou plusieurs galets de cintrage, et partiellement réchauffé dans la zone des galets de cintrage, après quoi il est refroidi par l'intérieur au moyen d'air comprimé froid, avant d'être placé dans un bain d'eau froide **caractérisé en ce que** le tuyau est, avant placement autour des galets de cintrage, préchauffé dans un bain d'eau à environ 80° C, et en ce que le tuyau est, dans la zone des galets de cintrage, réchauffé quasiment de tous côtés sous un flux d'air chaud pendant une durée de 10 à 15 secondes, de telle sorte que la température en est portée à maximum 160° C.

2. Dispositif pour la mise en oeuvre du procédé suivant la revendication 1 avec plusieurs galets de cintrage (3) à gorge, placés dans un bati (1) et réglables en fonction de la forme à donner au tuyau, avec des sources de chaleur pour le réchauffage du tuyau (4) dans la zone des parties à cintrer, ainsi qu'avec un raccordement d'air comprimé froid destiné à parcourir le tuyau (4) aux fins de le refroidir **caractérisé en ce qu'**en tant que sources de chaleur pour le réchauffage du tuyau (4), il est prévu des réchauffeurs d'air qui présentent chacun un conduit d'amenée d'air (19) entourant les galets de cintrage (3), en ce que les galets de cintrage (3) présentent, sur chacune de leurs deux faces latérales, au moins une série d'orifices (15) pour le passage transversal de l'air chaud provenant des réchauffeurs d'air, en ce que les orifices (15) communiquent avec des ouvertures (17) prévues dans le fond des gorges des galets de cintrage (3), ouvertures qui mènent à un conduit d'evacuation (18) de l'air chaud prévu dans chaque galet de cintrage.

3. Dispositif suivant la revendication 2 **caractérisé en ce que,** sur le bâti (1) de la machine, sont disposés des organes de contrôle et de commande du processus de travail, en particulier pour le déplacement, la mise en marche et la mise à l'arrêt des réchauffeurs d'air, ainsi que des organes de contrôle et de commande de l'amenée d'air comprimé destiné au refroidissement du tuyau.

4. Dispositif suivant la revendication 2 **caractérisé en ce qu'**en tant que réchauffeur d'air, il est prévu une soufflerie d'air chaud (5).

5. Dispositif suivant la revendication 2 **caractérisé en ce que** les galets de cintrage (3) comportent chacun deux parties, la partie supérieure (13) en forme de demi-cercle disposée au-dessus de la partie inférieure (14) pouvant pivoter par rapport à celle-ci.

6. Dispositif suivant la revendication 4 **caractérisé en ce que** la soufflerie d'air chaud (5) présente un conduit d'air (19) avec une échancrure (20) en demi-cercle correspondant à la forme du galet de cintrage.
